(19) Europäisches Patentamt
European Patent Office
Office européen des brevets

(11) EP 4 525 360 A1

(12) EUROPEAN PATENT APPLICATION

(43) Date of publication:
**19.03.2025 Bulletin 2025/12**

(21) Application number: **23306527.5**

(22) Date of filing: **15.09.2023**

(51) International Patent Classification (IPC):
***H04L 9/40*** *(2022.01)* ***G06F 21/57*** *(2013.01)*

(52) Cooperative Patent Classification (CPC):
**H04L 63/1433; G06F 21/577; H04L 63/1408**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Genetec Inc.**
**Montréal, QC H4S 2A4 (CA)**

(72) Inventors:
- **BERTON, Alexandre**
  **60600 Agnetz (FR)**
- **FAUCONNET, Christophe**
  **51100 Reims (FR)**
- **ROSSIGNOL, Nicolas**
  **92270 Bois Colombes (FR)**
- **KARROUT, Mehdi**
  **93140 Bondy (FR)**

(74) Representative: **IPAZ**
**Bâtiment Platon**
**Parc Les Algorithmes**
**91190 Saint-Aubin (FR)**

# (54) SECURITY SYSTEM RISK CALCULATION

(57) A computer-implemented method for assessing risk of a site, wherein the site is divided into multiple zones and monitored by a plurality of devices disposed within the multiple zones, the computer-implemented method comprising associating a respective device sensitivity to each of the plurality of devices and a respective zone sensitivity to each of the multiple zones; monitoring the plurality of devices to get status information; and determining an aggregate risk for the site based on the zone sensitivities, the device sensitivities, and the device status information, wherein the aggregate risk is proportional to a number of devices in an error status and inversely proportional to a total number of the plurality of devices.

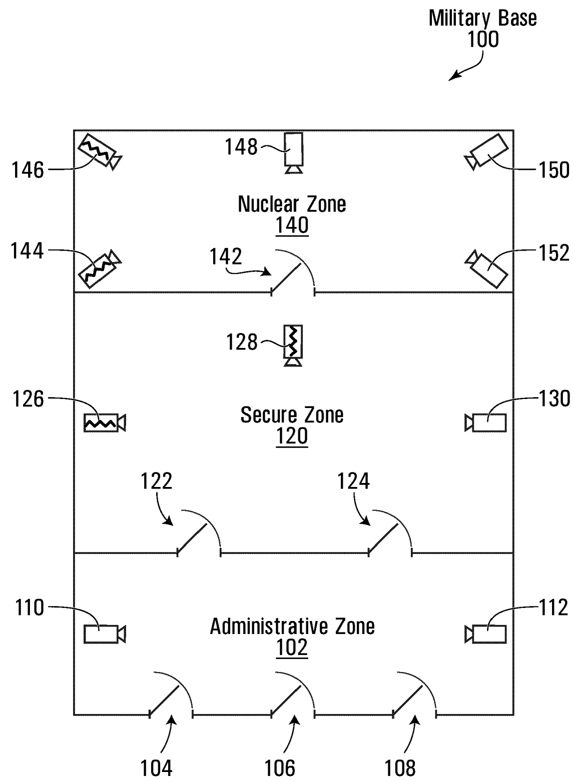


FIG. 1

EP 4 525 360 A1

## Description

### TECHNICAL FIELD

This disclosure is generally related to security systems, and more particularly to risk calculation systems and methods in support of security systems. More specifically, this disclosure is related to calculating the risk percentage and/or safe percentage of sites.

### BACKGROUND

Site security typically includes security items and/or devices to secure the site. Traditional algorithms consider each security item as a vulnerability. However, this is a problem because the mere presence of a security item is not a vulnerability, particularly if the security item is functioning properly. A more accurate method for calculating risk is therefore needed that correctly appraises the risk associated with each security item, zone, and site.

### SUMMARY

Methods and systems for assessing risk of one or more sites are disclosed in the application. The site may be divided into multiple zones that are monitored by a plurality of devices. A computing device and/or user may associate a respective device sensitivity to each of the plurality of devices and a respective zone sensitivity to each of the multiple zones. Device sensitivity may reflect the vulnerability caused by a device's failure or malfunctioning (e.g., device offline, firmware update needed, camera occluded, door not properly closed). Zone sensitivity may reflect the impact (e.g., business and/or technical) if a zone is compromised. The computing device and/or user may monitor the plurality of devices to get status information (e.g., device offline, device online, device not working properly, device power low, device battery running low, replacement battery needed, device working properly, firmware update needed, camera occluded, and/or door not properly closed, etc.). The computing device and/or user may determine an aggregate risk for the site based on the zone sensitivities, the device sensitivities, and the device status information using an algorithm disclosed in this application. A feature of said algorithm is that the aggregate risk for the site is proportional to the number of devices in an error status and inversely proportional to the total number of the plurality of devices on the site. In some embodiments, a device may monitor more than one zone (e.g. 2, 3, 4, 5, 6, 7, 8, etc.). In such cases, the device may be integrated into the zone risk calculation for each zone it monitors or be integrated into the zone risk calculation for one (e.g., the zone with the highest impact or the zone which the devices monitors the most) or more of the zones it monitors.

In some examples, a computer-implemented method for assessing risk of a site is provided, wherein the site is divided into multiple zones and monitored by a plurality of devices disposed within the multiple zones, involves associating a respective device sensitivity to each of the plurality of devices and a respective zone sensitivity to each of the multiple zones, monitoring the plurality of devices to get status information, and determining an aggregate risk for the site based on the zone sensitivities, the device sensitivities, and the device status information. The aggregate risk may be proportional to a number of devices in an error status and inversely proportional to a total number of the plurality of devices.

For example, the computer-implemented method for assessing risk of a site, wherein the site is divided into multiple zones and monitored by a plurality of devices disposed within the multiple zones, the plurality of devices connected with a server over an IP network, may comprise steps of: associating, at the server, a respective device sensitivity to each of the plurality of devices and a respective zone sensitivity to each of the multiple zones; obtaining, at the server and over the IP network, communications from the plurality of devices; monitoring, using the communications, the plurality of devices to get status information from the communications; determining an aggregate risk for the site based on the zone sensitivities, the device sensitivities, and the device status information, wherein the aggregate risk is proportional to a number of devices in an error status and inversely proportional to a total number of the plurality of devices; and outputting, to a user, an indication of the aggregate risk.

The step of determining the aggregate risk may comprise determining zone-specific risks, the aggregate risk being based on an average of the zone-specific risks. The aggregate risk may be based on a weighted average of the zone-specific risks. The weighted average may be based on weights associated with each of the multiple zones. The aggregate risk may be determined based on a maximum zone-specific risk, an average zone-specific risk, and a ratio of zones in risk to a total number of the multiple zones. The average zone-specific risk may be determined excluding the maximum zone-specific risk. The aggregate risk may be based on a weighted maximum zone-specific risk.

The step of determining zone-specific risks may comprise determining, on a per-zone basis, a maximum device-specific risk and an average device-specific risk, wherein the aggregate risk is based on the maximum device-specific risk of the multiple zones, the average device-specific risk of the multiple zones, and a ratio of the number of devices in the error status to the total number of the plurality of devices. The average device-specific risk for each zone may be determined excluding the maximum device-specific risk within the zone. The aggregate risk may be determined based on a maximum zone-specific risk, an average zone-specific risk, and a ratio of zones in risk to a total number of the multiple zones. The average zone-specific risk may be determined excluding the maximum zone-specific risk. The aggregate risk may be based on a weighted maximum device specific risk, a weighted average of the device-specific risk of the multiple zones, a weighted ratio of the number of devices in the error status to the total number of the plurality of devices, a weighted maximum zone-specific risk, a weighted average zone-specific risk, and a weighted ratio of zones in risk to a total number of the multiple zones. The step of outputting may comprise outputting the aggregate risk and the zone-specific risks via an interface. The aggregate risk may be determined based on a ratio of the number of devices in the error status to the total number of the plurality of devices. The step of associating the respective zone sensitivity to the multiple zones may comprise associating, to each of the multiple zones, a vulnerability indicative of a risk of the respective zone being compromised. The step of associating the respective zone sensitivity to the multiple zones may comprise associating, for each zone of the multiple zones, an impact indicative of a potential damage that would be caused if the respective zone is compromised. The step of associating the respective device sensitivity to the plurality of devices may comprise associating, to each of the plurality of devices, a vulnerability indicative of a level of exposure if the respective device is compromised. The level of exposure may be based on a scope of coverage of the respective device. The level of exposure may be based on the importance of the scope of coverage. The level of exposure of a particular device may be based on a degree of overlap between the scope of coverage of the particular device and the scope of coverage of other devices within the plurality of devices.

In some examples, a non-transitory computer-readable medium may store computer-readable instructions which, when executed by a computing device, cause the computing device to: associate, at a server, a respective device sensitivity to each of a plurality of devices disposed within multiple zones of a site and a respective zone sensitivity to each of the multiple zones, the plurality of devices connected with the server over an IP network, wherein the plurality of devices monitor the site; obtain, at the server and over the IP network, communications from the plurality of devices; monitor, using the communications, the plurality of devices to get status information from the communications; determine an aggregate risk for the site based on the zone sensitivities, the device sensitivities, and the device status information, wherein the aggregate risk is proportional to a number of devices in an error status and inversely proportional to a total number of the plurality of devices; and output, to a user, an indication of the aggregate risk.

In some examples, a system for risk assessment can comprise: processor circuitry; and a non-transitory computer-readable memory storing program instructions executable by the processor circuitry for: associating, at a server, a respective device sensitivity to each of a plurality of devices disposed within multiple zones of a site and a respective zone sensitivity to each of the multiple zones, the plurality of devices connected with the server over an IP network, wherein the plurality of devices monitor the site; obtaining, at the server and over the IP network, communications from the plurality of devices; monitoring, using the communications, the plurality of devices to get status information from the communications; determining an aggregate risk for the site based on the zone sensitivities, the device sensitivities, and the device status information, wherein the aggregate risk is proportional to a number of devices in an error status and inversely proportional to a total number of the plurality of devices; and outputting, to a user, an indication of the aggregate risk.

In some examples, a computer-implemented method for assessing risk of a site may comprising: obtaining information that identifies a site and the division of the site into multiple zones; recognizing a plurality of devices disposed within the multiple zones, the plurality of devices connected with a server over an IP network; displaying, in an interface, a respective representation for each of the plurality of devices; recognizing a relationship between each of the plurality of devices and one of the multiple zones; recognizing a respective device sensitivity associated to each of the plurality of devices; recognizing a respective zone sensitivity associated to each of the multiple zones; monitoring, using communications obtained at the server and over the IP network, the plurality of devices to get status information from the communications; determining an aggregate risk for the site based on the zone sensitivities, the device sensitivities, and the device status information, wherein the aggregate risk is proportional to a number of devices in an error status and inversely proportional to a total number of the plurality of devices; and outputting, to a user, an indication of the aggregate risk.

In some examples, a method for assessing risk of a site may comprise: identifying a site; dividing the site into multiple zones; recognizing a plurality of devices disposed within the multiple zones, the plurality of devices connected with a server over an IP network, wherein a respective representation for each of the plurality of devices is displayed in an interface; establishing, at the server, a relationship between each of the plurality of devices and one of the multiple zones; associating, at the server, a respective device sensitivity to each of the plurality of devices; associating, at the server, a respective zone sensitivity to each of the multiple zones; recognizing, at the server and over the IP network, communications from the plurality of devices; monitoring, using the communications, the plurality of devices to get status information from the communications; and monitoring an aggregate risk output indication for the site based on the zone sensitivities, the device sensitivities, and the device status information, wherein the aggregate risk is proportional to a number of devices in an error status and inversely proportional to a total number of the plurality of devices.

The step of associating a respective device sensitivity to each of the plurality of devices may comprise configuring access rules for each of the plurality of devices. step of associating a respective device sensitivity to each of the plurality of devices may comprise assigning a respective impact to each of the multiple zones. The step of establishing the relationship between each of the plurality of devices and one of the multiple zones may comprise assigning a respective entity that controls each of the plurality of devices.

## BRIEF DESCRIPTION OF THE DRAWINGS

The present description will be understood more fully when viewed in conjunction with the accompanying drawings of various examples of risk calculation. The description is not meant to limit the risk calculation to the specific examples. Rather, the specific examples depicted and described are provided for explanation and understanding of risk calculation. Throughout the description the drawings may be referred to as drawings, figures, and/or FIGs.

FIG. 1 is a diagram of a military base sample site.
FIG. 2A is an example display of a risk score of a sub area of a site.
FIG. 2B is another example display of a risk score of a sub area of a site.
FIG. 3A is an example graphical user interface (GUI) for selecting vulnerability settings.
FIG. 3B is another example graphical user interface (GUI) for selecting vulnerability settings.
FIG. 4 is an example display of situation awareness of a site.
FIG. 5 is an example risk graph for a site.
FIG. 6 is an example diagram of the risk calculation modules.
FIG. 7 is a flowchart of an example method for risk calculation of a site.
FIG. 8 is another flowchart of another example method for risk calculation of a site.
FIG. 9 is a block diagram of an example computing system.

## DETAILED DESCRIPTION

When securing a physical site, for example a site secured by a security system, discovering vulnerabilities in the site security may be important. Estimating the risk associated with each vulnerability may also help to gauge the level of security and/or risk of the site. Risk models disclosed herein may calculate risk as a combination of the likelihood of one or more compromising events occurring and the impact of those one or more compromising events occurring. However, in contrast with existing approaches which consider all devices to represent vulnerabilities, and therefore increased risk, the present approach accounts for the value of redundancy in the security system of the site. As will be described in greater detail hereinbelow, risk calculations will be based in part on the total number of devices in the system, to represent the value of the redundancy of the system and thereby assist operators in properly understanding the risk to which their site is exposed.

The calculated risk value can help an operator of a security system in managing maintenance and upgrades to the security system. The calculated risk value can also help an operator of a security system in monitoring a secured site by providing an indication of risk associated with a zone or specific area so that proper attention can be paid where it most warrants it.

In order to illustrate the use of an embodiment of a disclosed risk calculation method, the safety and risk of an example site, military base 100, will be calculated. FIG. 1 depicts military base 100. Military base 100 is comprised of three zones, the administrative zone 102, the secure zone 120, and the nuclear zone 140. A site may comprise one or more zones. The administrative zone 102 comprises five security items, doors 104, 106, 108 and cameras 110, 112. The secure zone 120 comprises five security items, doors 122, 124 and cameras 126, 128, 130. The nuclear zone 140 comprises six security items, door 142 and cameras 144, 146, 148, 150, 152. As illustrated, military base 100 uses cameras and doors as security items. However, a site may include various types of security items and/or devices, for example, cameras, doors, windows, gates, access points, turnstiles, fences, security check points, bollards, tire strips, elevators, stairwells, scanners, security keypads (e.g., with user code input), keys, access cards, proximity cards, swipe cards, cipher locks, credentialing methods, biometric (e.g., eye, finger, hand, facial, voice) scanners, motion detectors, choreographed movement scanners, detectors (e.g., fire, smoke, carbon monoxide), access controls, noise sensors, light sensors, laser sensors, temperature sensors, humidity sensors, alarms, lighting, communication devices, microphones, speakers, other sensors, and/or intrusion detection devices.

The association between zones 102, 120, 140 and security items may be established based on predetermined rules or policies, by user and/or computing device input, or in any other suitable fashion. In some embodiments, a policy dictates that certain security items may be associated with a zone based on where the security items are physically located. For example, cameras 110 and 112 are associated with the administrative zone 102 because they are physically located within the administrative zone 102. In some other embodiments, a policy dictates that certain security items may be associated with a zone based on which zone the security items provide access to. For example, doors 104, 106, and 108 provide access to the administrative zone 102 from, for instance, an area outside the military base 110. In the case of doors 122, 124, and 142, which provide access between two different zones, the policy may stipulate that the doors are to be associated with the more restrictive and/or the least restrictive of the two zones to which they provide access. In the case of a keycard reader or similar device which may provide only unidirectional access (e.g., a user must scan a keycard to go through door 142 from the secure zone 120 to the nuclear zone 140, but not in the opposite direction), the policy may dictate that the security device is associated with the zone to which it controls access.

In some further embodiments, a policy dictates that certain security items may be associated with a zone based on what area they surveil or otherwise collect data. Cameras, radars, lasers, sensors are a few types of security items that may be physically located in one zone and surveil one or more zones. For example, a camera may be physically located in one zone, but pointed such that some or all of the field of view of the camera is located within another, different zone. In such a case, the policy may dictate that the camera is associated with the zone most within the camera's field of view or any zone within the camera's field of view, and not the zone in which the camera is physically located. For instance, camera 130, which is located in secure zone 120, may have door 142 within its field of view, which provides access to nuclear zone 140. In such case, the policy may dictate that camera 130 is associated with nuclear zone 140, since door 142 is an entrance into the nuclear zone 140. The policy may further provide for dynamic switching of association between security items and zones. One reason for switching association may be a change of field of view, change of surveillance area, and/or a desire to increase, decrease, balance out the amount of security items associated with the zones. For instance, with regard to a change of field of view, camera 130, which is located in secure zone 120, may start of in a position with door 142 in its field of view. The user or the computing device may shift the camera 130 angle such that door 142 is partially or no longer within its field of view. In such case, camera 130 may dynamically switch its association from nuclear zone 140 to secure zone 120. The computing device may notify the user of the change in field of view, prompt the user to switch, and/or ask for approval to make the switch.

In the case of a desire to balance out the amount of security devices associated with zones, secure zone may not have any security items associated with it. In such case, the computing device may notify the user that a zone has few or no security devices associated with it. For instance, an initial policy configuration may dictate that doors 122, 124 are associated with administrative area 102 (e.g., because administrative zone 102 is the least restrictive zone) and cameras 126, 128, 130 are associated with nuclear zone 140 and/or administrative zone 102 (e.g., because the nuclear zone 140 and the administrative zone 102 are within the cameras' field of view). In such case, secure zone 120 has no security items associated with it. The computing device and/or user input may dictate that door 122 and/or camera 130 switch association to secure zone 120 (e.g., based also, at least in part, on the fact that nuclear zone 140 and administrative zone 102 already have several cameras and a door associated with them.

The user and/or computing device may use more than one policy at the same time with assigned priorities for each policy to dictate the proper security item zone association should a situation arise that causes a conflict of policies. Other approaches for associating security devices with zones, including based on user input, are also considered.

A computing device, a system for risk assessment, and/or a non-transitory computer-readable medium storing computer-readable instructions may assess the risk of a site. The site may be divided into multiple zones and monitored by a plurality of devices disposed within the multiple zones. The plurality of devices may be connected with a server over an internet protocol (IP) network. IP may be the network layer communications protocol in the Internet protocol suite for relaying datagrams across network boundaries. IP's routing function may enable internetworking (e.g., the practice of interconnecting multiple computer networks, such that any pair of hosts in the connected networks can exchange messages irrespective of their hardware-level networking technology). IP may deliver packets from the source host to the destination host based on the IP addresses in the packet headers. The IP network may or may not be connected to the internet. The IP network may comprise a local area network (LAN). The LAN may comprise a computer network that interconnects computers within a limited area such as a residence, school, laboratory, university campus, office building, power plant, dam, museum, building, and/or military base. The IP network may utilize a bus network, ethernet, Wi-Fi, Zigbee and/or Bluetooth to connect the various computing devices, security items, and/or servers. The computing device and/or the user may associate, at the server, a respective device sensitivity to each of the plurality of devices and a respective zone sensitivity to each of the multiple zones.

The computing device and/or the user may obtain, at the server and over the IP network, communications from the plurality of devices. The computing device and/or the user may monitor, using the communications, the plurality of devices to get status information (e.g., online, offline, update needed, functioning properly, malfunctioning, etc.) from the communications. The computing device and/or the user may determine an aggregate risk for the site based on the zone sensitivities, the device sensitivities, and the device status information. The aggregate risk may be proportional to a number of devices in an error status and inversely proportional to a total number of the plurality of devices. For example, the aggregate risk may increase as the number of devices in error increases, and the aggregate risk may decrease as the number of devices in error decreases. Alternately, the aggregate risk may increase as the total number of devices decreases, and the aggregate risk may decrease as the total number of devices increases. The computing device and/or the user may output, to a user, an indication of the aggregate risk.

The following algorithm may be used to compute the risk percentage for any site (e.g., military base 100):

$$\left[\frac{\text{Maximum risk score}}{100} * Maximum\ weight + \frac{\begin{array}{c}Average\ risk\ score\\(excluding\ maximum\ risk\ score)\end{array}}{100} * Average\ weight + \frac{Number\ of\ items\ in\ error}{Number\ of\ total\ items} * Factor\ weight\right] * Impact$$

Equation 1

The above algorithm may be employed to calculate the risk score for each zone and then for the entire site. Certain elements of the algorithm may be removed, added, and/or adjusted in other cases.

The maximum risk score may refer to the device in a zone and/or the zone within the site that has the highest risk score. For example, after calculating the risk score for every zone in military base 100 the nuclear zone 140 may have a higher risk score as compared to the administrative zone 102 and the secure zone 120, and thus the nuclear zone 140 may be assigned the maximum risk score. In some cases, zones and/or devices may have equally high risk scores. In such cases, user input and/or the computing device may randomly select any one of the zones and/or devices with equally high risk scores as the maximum risk score, the zone that has the highest impact as the maximum risk score, and/or the device that has the highest vulnerability in the zone as the maximum risk score. By way of another example, within the secure zone 120, the camera 128 may be assigned the maximum risk score even though camera 126 has the same vulnerability. In certain cases, more than one device in a given zone (or more than one zone within a site) may have the same highest risk score. In such cases, any one of the highest risk scores may be chosen as the maximum risk score for purposes of calculating with the algorithm.

A user and/or a computing device may identify, select, calculate and/or determine the vulnerability of each device, the impact values of each zone, the maximum risk scores of each zone and the site, the average risk scores (excluding maximum risk scores) of each zone and the site, the number of items (or zones) in error, the number of total items (or zones), the maximum weights, the average weights, the factor weights, the risk percentage, and/or the safe percentage. For example, a user may be provided with a graphical user interface (GUI) via which the user can provide input indicative of the device vulnerabilities, impact values, the number of items (or zones) in error, the number of total items (or zones), the maximum weights, the average weights, and the factor weights. While the computing device may sometimes determine a device to be part of the site and a device to be in error, the GUI may allow for the user to manually input a device as part of the site and label a device in error. The GUI may allow the user to verify and/or give permission to the computing device to proceed with its suggested identifications, selections, calculations, and/or determinations. In some cases, the average risk scores (excluding maximum risk scores) of each zone and the site may be a mode, median, and/or mean (e.g., arithmetic, geometric, harmonic, root mean square, and/or contra harmonic) of risk scores. By way of another example, the computing device may be configured to assign default values to different zones and devices, or to apply an algorithm to assign values to different zones and devices based on preliminary user input. For instance, the user may provide qualitative and/or quantitative information about the site being surveilled, such as the military base 100, regarding which zones are more sensitive, what types of persons have access to different zones, etc. The computing device may, based on the information, implement an algorithm or other computational method to calculate different risk scores or the like for the different zones and devices within the military base 100. Other approaches are also considered.

Risk score, impact values, and factor weights may include any real or imaginary numbers. In the case of military base 100, the risk scores, impact values, and factor weights are numbers chosen between and including 0 and 100. It is convenient to have 100 as the upper limit as percentages (e.g., risk percentages, safe percentages) are based on the number 100. Nevertheless, it should be understood that other scales or ranges for the various scores, values, and weights described herein are also considered. For example, in some cases the impact values and/or factor weights may be expressed on a decimal scale between 0 and 1. By way of another example, risk scores may be expressed on a scale of 0 to 10, 0 to 5, or the like. Additionally, in some embodiments the various scores, values, and weights may be expressed as numerical values but represented to operators or other users of the system in some non-numerical fashion, for instance using colors, symbols (e.g., a star-rating system), graphs, charts, or other indicators.

The impact value may reflect the importance of the zone (or site) and/or the impact if it the zone (or site) is compromised. Impact values may reflect the level of exposure if the site is compromised (e.g., geographical area, importance of area, etc.). If a zone or site has an impact of 100, it is very important. If a zone or site has an impact of 0, it is not important. Compromising events may include one or more of the following conditions: fire, smoke, flooding, security breach, device offline, device not working properly, device tampering event, device power low, device battery running low, replacement battery needed, firmware update needed, software update needed, hardware update needed, replacement part needed, camera occluded, fence (or gate, door, etc.) damaged or breached, gate not properly closed, and/or door not properly closed, etc.

A user and/or a computing device may set an impact value for each zone 102, 120, 140 and for the entire site 100. With regards to the military base 100, the following values may be selected manually and/or by default:

| Zone | Impact Value |
|---|---|
| Administrative Zone | 20 |
| Secure Zone | 40 |
| Nuclear Zone | 100 |
| Whole site (military base 100) | 80 |

In this example, the nuclear zone 140 is assigned a maximum impact score of 100, whereas the secure zone 120 and the administrative zone 102 are provided with comparatively lower impact scores of 40 and 20, respectively. This may be because an unauthorized breach of the nuclear zone 140 is much more likely to cause harm to the military base 100 and/or to the surrounding areas than a breach of the administrative zone 102. Similarly, the secure zone 120 is assigned a higher impact score than the administrative zone 102, for instance because the administrative zone 102 provides no access to sensitive systems, whereas the secure zone 120 does. A device or zone may be assigned a higher impact depending on the field of surveillance of the device, the importance of zone, and various other factors.

In Fig. 1, administrative zone 102, secure zone 120 and nuclear zone 140 are located inside the miliary base 100. Any weight values, chosen by a computing device and/or the user, may be used in the algorithm. Regarding calculating the risk score for the military base 100, the following weight values may be selected manually and/or by default:

| Weight Category | Weight Value |
|---|---|
| Maximum weight | 80 |
| Average weight | 5 |
| Factor weight | 15 |

The weight value may be used to fine tune the algorithm. For instance, a user and/or computing device may notice that a site does not have many or any security items with overlapping fields of view (e.g., cameras that do not cover the same area) or fields of surveillance (e.g., entrance that only has a door without any sensors or motion detectors). In such a case, the burden on each security device to work properly is higher than if there was an overlap. Thus, the user and/or the computing algorithm may set the maximum weight to be higher than the average weight and the factor weight in order to emphasize that a deficiency in one device is highly consequential. Where there is overlapping surveillance, the average weight may be higher than the maximum weight because there is less of a burden on each discrete security item to function properly. In some cases, two cameras (e.g., cameras 148 and 150) may have overlapping (e.g., redundant) fields of views. That is, the two cameras 148, 150 may monitor the same door 142 from different angles. If one of the cameras stop working properly, the level of exposure is less serious since the other camera will still have visibility on the door 142. If a single camera monitors a door, the vulnerability will be greater, because the security system will completely lose visibility of the door. Redundant security items may typically have a lower vulnerability than isolated security items. In other cases, cameras 148 and 150 monitor a lobby of the nuclear zone 140. Camera 150 may give an overall view of the lobby. And camera 148 may mainly film the door 142, which gives access to the nuclear zone 142 from the lobby. In such cases, camera 150 may have a lower vulnerability. The overview it provides gives context but may not be essential. Access to the door may be the most critical aspect of security for the nuclear zone 140. Thus, camera 148 may have a higher vulnerability.

If the overall accuracy of the security devices and/or zones is important, the factor weight may be set higher than the maximum weight and average, and vice versa. In this example, the sum of the maximum weight, average weight, and the factor weight may be 100. In other embodiments, the sum may be another number. When the sum is a number other than 100, the computing device may normalize the number (e.g., scaling to a range, clipping, log scaling, and/or z-score). In the scenario of the military base 100, cameras 126 and 128 in an error status in the secure zone 120, while cameras 144 and 146 are in an error status in the nuclear zone 140. For example, the camera 126 may be in an error status because of a loss of power, occlusion, improper field of view, poor connectivity, non-functionality, faulty hardware, faulty software, and/or faulty firmware. In other scenarios, other devices may be nonfunctional. For example, a door may be labeled as malfunctioning if it does not shut properly, the access point for the door (e.g., door scanner or keypad) is damaged, the door scanner is non-functional, the keypad is offline, and/or the door does not send correct status information (e.g., status information reports that the door is closed when it is actually open).

The vulnerability of each device may be selected, by a computing device and/or a user, from default values or on a case-by-case basis. In the military base 100, each camera has been assigned a vulnerability of 100. This means that when a camera is in an error status (e.g., down or compromised), the risk level is 100.

With the impact values, weight values, and vulnerabilities selected, the risk percentage for each zone (administrative zone 102, secure zone 120, and nuclear zone 140) and the site (base station 100) may now be calculated:

The risk percentage of the risk percentage in the administrative zone 102 is 0 as all security devices (cameras 110, 112 and doors 104, 106, 108) are working. 0 is the maximum risk score, 0 is the average risk score, and 0 is the number of items in error. Thus, when 0 is plugged into the equation in the relevant places, the resulting risk percentage is 0%, which means the safe percentage is 100%.

Next, the risk percentage in the secure zone 120 may be calculated. Two cameras are down (cameras 126, 128) out of five total security items (cameras 126, 128, 130 and doors 122, 124). Thus, the maximum risk score is 100. Since the vulnerability of both compromised cameras 126, 128 is 100, the user and/or computing device may select either camera as having the maximum risk score. In this case, camera 126 is selected as having the maximum risk score of 100.

$$\frac{\text{Maximum risk score}}{100} * Maximum\ weight$$

$$\frac{100}{100} * 80 = 80$$

Average risk of the other four security items (cameras 128, 130 and doors 122, 124) excluding the maximum risk score security device, camera 126:

$$\frac{\begin{matrix} Average\ risk\ score \\ (excluding\ maximum\ risk\ score) \end{matrix}}{100} * Average\ weight$$

$$\frac{\frac{(100\ +\ 0\ +\ 0\ +\ 0)}{4}}{100} * 5 = 1.25$$

The secure zone 120 has two items in error (cameras 126,128) and five total security items monitoring the zone (cameras 126,128,130 and doors 122, 124):

$$\frac{Number\ of\ items\ in\ error}{Number\ of\ total\ items} * Factor\ weight$$

$$\frac{2}{5} * 15 = 6$$

The risk percentage for the secure zone is calculating by multiplying the secure zone 120 impact value (40) by the sum of the weighted maximum risk score, weighted average risk score, and weighted items ratio:

$$(Maximum\ risk\ score\ component + Avergae\ risk\ score\ component \\ + Factor\ component)\% * \ impact$$

$$(80 + 1.25\ + 6)\% * \ 40 = 34.9\%$$

Next, the risk percentage in the nuclear zone 140 may be calculated. Two cameras are down (cameras 144, 146) out of six total security items (cameras 144,146,148,150,152 and doors 142). Thus, the maximum risk score is 100. Since the vulnerability of both compromised cameras 144,146 is 100, the user and/or computing device may select either camera as having the maximum risk score. In this case, camera 144 is selected as having the maximum risk score of 100.

$$\frac{\text{Maximum risk score}}{100} * Maximum\ weight$$

$$\frac{100}{100} * 80 = 80$$

Average risk of the other five security items (cameras 146,148,150,152 and door 142) excluding the maximum risk score security device, camera 144:

$$\frac{\begin{matrix} Average\ risk\ score \\ (excluding\ maximum\ risk\ score) \end{matrix}}{100} * Average\ weight$$

$$\frac{\frac{(100 + 0 + \ 0\ + \ 0\ + \ 0)}{5}}{100} * 5 = 1$$

The nuclear zone 140 has two items in error (cameras 144,146) and six total security items monitoring the zone (cameras 144,146,148,150,152 and door 142):

$$\frac{Number\ of\ items\ in\ error}{Number\ of\ total\ items} * Factor\ weight$$

$$\frac{2}{6} * 15 = 5$$

The risk percentage for the secure zone is calculating by multiplying the secure zone 120 impact value (40) by the sum of the weighted maximum risk score, weighted average risk score, and weighted items ratio:

$$(80 + 1\ + 5)\% *\ 80 = 86\%$$

Now that the risk percentage for the administrative zone 102, secure zone 120, and nuclear zone 140 have been calculated, the risk percentage for the in whole military base 100 site may be calculated.

In the site-based risk percentage calculation, the risk percentage of the zones are considered for the maximum risk, average risk and items. The risk percentage for the zones were calculated as follows:

Administrative zone risk = 0
Secure zone risk = 34.9
Nuclear zone risk = 86

The maximum risk score of the zones is 86, that of the nuclear zone 140.

$$\frac{\text{Maximum risk score}}{100} * Maximum\ weight$$

$$\frac{86}{100} * 80 = 68.8$$

The average risk of the other two zones, the administrative zone 102 and secure zone 120, may be calculated (excluding the maximum risk score of 86 for the nuclear zone):

$$\frac{\begin{matrix}Average\ risk\ score\\(excluding\ maximum\ risk\ score)\end{matrix}}{100} * Average\ weight$$

$$\frac{\frac{(0+34.9)}{2}}{100} * 5 = 0.8725$$

The military base 100 has two zones in error (e.g., zones with one or more compromised security devices), secure zone 120 and nuclear zone 140, and three total zones (administrative 102, secure zone 120, and nuclear zone 140):

$$\frac{Number\ of\ items\ in\ error}{Number\ of\ total\ items} * Factor\ weight$$

$$\frac{2}{3} * 15 = 10$$

Thus, the risk percentage for whole site (military base 100) may be calculated by multiplying the military base impact value (80) by the sum of the weighted maximum risk score, weighted average risk score, and weighted items ratio:

$$(68.8 + 0.8725\ + 10)\% *\ 80 = \mathbf{63.738}\%$$

The safe score may be calculated as 100% - risk percentage. For the military base 100, the safe score is 100% - 63.738% = **36.262%.**

As described hereinabove, the algorithm presented in Equation 1 may be modified in any number of ways. In some embodiments, the aggregate risk for the site is determined based on the zone sensitivities, the device sensitivities, and the device status information, with the aggregate risk being proportional to the number of devices having an error status, and inversely proportional to the total number of devices. For instance, factors associated with the zone sensitivity and the device sensitivity may be combined with a ratio of the number of error status devices to the total number of devices to produce an aggregate risk for the site. In some embodiments, the aggregate risk is determined by first determining zone-specific risks, and the aggregate risk is based on an average of the zone-specific risks. In some instances, the aggregate risk may be a weighted average of the zone-specific risks, for example with different weights associated with each of the different zones.

In some embodiments, the weighted average may be based on weights associated with each of the multiple zones. In some embodiments, the aggregate risk may be determined based on a maximum zone-specific risk, an average zone-specific risk, and a ratio of zones in risk to a total number of the multiple zones. In some embodiments, the average zone-specific risk is determined excluding the maximum zone-specific risk. In some embodiments, the aggregate risk may be based on a weighted maximum zone-specific risk. In some embodiments, determining zone-specific risks comprises determining, on a per-zone basis, a maximum device-specific risk and an average device-specific risk, wherein the aggregate risk is based on the maximum device-specific risk of the multiple zones, the average device-specific risk of the multiple zones, and a ratio of the number of devices in the error status to the total number of the plurality of device.

In some embodiments, the average device-specific risk for each zone is determined excluding the maximum device-specific risk within the zone. In some embodiments, the aggregate risk is determined based on a maximum zone-specific risk, an average zone-specific risk, and a ratio of zones in risk to a total number of the multiple zones. In some embodiments, the average zone-specific risk is determined excluding the maximum zone-specific risk. In some embodiments, the aggregate risk is based on a weighted maximum device specific risk, a weighted average of the device-specific risk of the multiple zones, a weighted ratio of the number of devices in the error status to the total number of the plurality of devices, a weighted maximum zone-specific risk, a weighted average zone-specific risk, and a weighted ratio of zones in risk to a total number of the multiple zones. In some embodiments, the computing device may output the aggregate risk and the zone-specific risks via an interface. In some embodiments, the aggregate risk is determined based on a ratio of the number of devices in the error status to the total number of the plurality of devices.

In some embodiments, associating the respective zone sensitivity to the multiple zones comprises associating, to each of the multiple zones, a vulnerability indicative of a risk of the respective zone being compromised. In some embodiments, associating the respective zone sensitivity to the multiple zones comprises associating, for each zone of the multiple zones, an impact indicative of a potential damage that would be caused if the respective zone is compromised. In some embodiments, associating the respective device sensitivity to the plurality of devices comprises associating, to each of the plurality of devices, a vulnerability indicative of a level of exposure if the respective device is compromised. In some embodiments, the level of exposure is based on a scope of coverage of the respective device. In some embodiments, the level of exposure is based on the importance of the scope of coverage. In some embodiments, the level of exposure of a particular device is based on a degree of overlap between the scope of coverage (e.g., field of view, field of surveillance) of the particular device and the scope of coverage of other devices within the plurality of devices.

Some embodiments may comprise a computer-implemented method for assessing risk of a site. The method may comprise obtaining information that identifies a site and the division of the site into multiple zones. The method may comprise recognizing a plurality of devices disposed within the multiple zones, the plurality of devices connected with a server over an IP network. The method may comprise displaying, in an interface, a respective representation for each of the plurality of devices. The method may comprise recognizing a relationship between each of the plurality of devices and one of the multiple zones; recognizing a respective device sensitivity associated to each of the plurality of devices. The method may comprise recognizing a respective zone sensitivity associated to each of the multiple zones. The method may comprise monitoring, using communications obtained at the server and over the IP network, the plurality of devices to get status information from the communications. The method may comprise determining an aggregate risk for the site based on the zone sensitivities, the device sensitivities, and the device status information, wherein the aggregate risk is proportional to a number of devices in an error status and inversely proportional to a total number of the plurality of devices. The method may comprise outputting, to a user, an indication of the aggregate risk.

Some embodiments may comprise a method for assessing risk of a site. The method may comprise identifying a site. The method may comprise dividing the site into multiple zones. The method may comprise recognizing a plurality of devices disposed within the multiple zones, the plurality of devices connected with a server over an IP network, wherein a respective representation for each of the plurality of devices is displayed in an interface. The method may comprise establishing, at the server, a relationship between each of the plurality of devices and one of the multiple zones. The method may comprise associating, at the server, a respective device sensitivity to each of the plurality of devices. The method may comprise associating, at the server, a respective zone sensitivity to each of the multiple zones. The method may comprise recognizing, at the server and over the IP network, communications from the plurality of devices; monitoring, using the communications, the plurality of devices to get status information from the communications. The method may comprise monitoring an aggregate risk output indication for the site based on the zone sensitivities, the device sensitivities, and the device status information, wherein the aggregate risk is proportional to a number of devices in an error status and inversely proportional to a total number of the plurality of devices. The method may comprise outputting, to a user, an indication of the aggregate risk. In some embodiments, the associating a respective device sensitivity to each of the plurality of devices comprises configuring access rules for each of the plurality of devices. In some embodiments, associating a respective device sensitivity to each of the plurality of devices comprises assigning a respective impact to each of the multiple zones. In some embodiments, establishing the relationship between each of the plurality of devices and one of the multiple zones comprises assigning a respective entity that controls each of the plurality of devices.

Fig. 2A is a display 200 of a risk score according to embodiments. The circle chart 206 graphically displays the risk percentage (e.g., aggregate risk percentage) versus safe percentage (e.g., aggregate safe percentage). The indication of the aggregate risk may be output or displayed to the user in various forms comprising a color scheme, star rating (e.g., 1 star to 5 stars), a thermometer gauge, another chart type, one or more graphs, audible message, a song, and/or lights. The risk portion and the safe portion of the chart may have different types of color, shading, and/or pattern in order to differentiate the two portions. The risk percentage may be displayed numerically 202 (e.g., 18%, 18/100). The safe percentage may also be displayed numerically 204 (e.g., 82%, 82/100). Fig. 2B depicts a risk display 210. The circle chart may display the number "100" to show that the total percentage of risk percentage and safe percentage is 100%. The risk percentage may be displayed numerically 212 (e.g., 33%, 33/100). The safe percentage may also be displayed numerically 214 (e.g., 67%, 67/100).

Fig. 3A is graphical user interface (GUI) 300 for selecting vulnerability settings. The user and/or computing device may set the vulnerability for one or more devices via the GUI 300. In this example, the vulnerability of the camera when it is offline may be set via a slider 302, a numerical input, or any other input method. The vulnerability of the door when it is offline may be set via a slider 304, a numerical input, or any other input method. The vulnerability may be set to a minimum (min) and/or maximum (max). In some embodiments, the minimum vulnerability may be 0 and the maximum vulnerability may be 100. The vulnerability of each device may be set to different values for different scenarios based on the severity of the vulnerability. For example, an offline device may be assigned a vulnerability of 100, intermittent connectivity issues may be assigned a vulnerability of 70, low battery may be assigned a vulnerability of 60, out of date firmware may be assigned a vulnerability of 40. The computing device may display, in an interface, one or more vulnerabilities to the user.

FIG. 3B is another graphical user interface (GUI) 310 for selecting vulnerability settings. The user and/or computing device may set the default vulnerability setting 312 for the door to be employed (e.g., ON) and/or not to be employed (e.g., OFF). The user and/or computing device may set the default offline vulnerability to a given amount via a slider 314, a numerical input, or any other input method. The vulnerability may be set to a minimum (min) and/or maximum (max). Here, the default offline vulnerability for the door is set to 78. GUIs disclosed herein may allow for the user and/or computing device to configure access rules for each device. Access rules may include, who or what entity may access and control the device, which APIs or software may access the device, when a device may be accessed, how a device may be accessed, how many times a device may be accessed, how many people may access a device at a given time or during a period of time, and/or the degree to which a device function may be configured, etc.

Fig. 4 displays a situation awareness chart. This chart may provide status updates on zones, sites, and/or devices. These updates may be initiated by a change in an area risk percentage and/or change in device state. Each row in the table may represent a state of the risk value (e.g., decreasing, increasing, or staying the same). Where there is change in risk value (e.g., the risk increases because a camera has gone offline, the risk goes down because a door come online, etc.), the risk change may be depicted graphically (e.g., arrows, colors, text, etc). In this embodiment, the time, name of the zone or site, name of the security device or item, area risk percentage, reason, and device state may be displayed. For example, at 10:47:19 in the "pre_treasure_0" zone, the risk /percentage was 63%. The reason why this is displayed is because the state of the door changed (e.g., the door went from offline to now online). In some cases, the risk percentage may decrease (and the safe value/percentage may increase) due to the door coming online. However, in Fig. 4, the risk percentage has increased for other reasons (e.g., the door is online yet open or malfunctioning). In another case, at 11:25:48 in the treasureArea, the area risk percentage is 66. This line item is displayed because the treasureArea risk percentage changed (e.g., went up or down).

Fig. 5 displays a risk graph 500 for a site and/or zone. In this case, the risk line 502 can be tracked over minutes, hours, days, weeks, months, and/or years. In November 2022 the risk was 200 and gradually dropped to 156 by December 2022 one month later. This graph may aid in identifying trends in the security of zones and sites. In some embodiments, a user may interact with various GUI elements of the risk graph 500, for instance to alter the time scale, to determine which devices and/or zones were contributing to the risk score displayed in the risk graph 500 at different times, and the like.

Fig. 6 is a diagram of risk calculation modules. The device status module 602 may monitor, verify, and/or display the status of devices in the site. The device status module 602 may monitor the plurality of devices within the site to get status information (e.g., device offline, device online, device not working properly, device power low, device battery running low, replacement battery needed, device working properly, firmware update needed, camera occluded, and/or door not properly closed, etc.) from the devices. In some embodiments, the devices may push status updates to the device status module 602. Alternatively, or in addition, the device status module 602 may pull status information from the devices. The device status module 602 may obtain status information at predetermined intervals, for instance periodically, or may receive status information punctually, for instance in response to changes in status. The device status module 602 may keep count of which devices are online and which devices are offline, which devices are experiencing other types of non-functional behavior, and the like, and provide this information to further risk calculation modules, including the algorithm/risk module 606. The sensitivity module 604 may set, determine, apply, and/or allow for the application of sensitivities for security items, zones, and/or sites. The sensitivities may include security device/item vulnerabilities, maximum weights, average weights, factor weights, and/or impact values for zones and sites.

The algorithm/risk module 606 may use the input from the device status module 602 and the sensitivity module 604 to calculate the risk percentage and/or the safe percentage for zones and/or sites. A similar process to the one disclosed in the calculation of the risk percentage of the military base 100 may be used. The algorithm disclosed herein may be modified in different ways as desired. For instance, certain devices and zones may be omitted from the calculation, the maximum risk score may be included in the average, one or more weights may be omitted, and/or one set of weights may be used for the zone calculations and another set of weights may be used for the site calculation.

The recommendation module 608 may provide the user or the computing device suggestions for increasing the safe percentage and/or decreasing the risk percentage (e.g., turn the device on, update the firmware, replace the lens, close the door, etc.). In some cases, the default setting may be to follow the recommendation without further input or approval (e.g., automatically updating the firmware when it is recommended). In other cases, approval from the user may be involved before following the recommendation. For example, the user may be provided with a dashboard which includes recommendations from the recommendation module 608. The user may be able to interact with GUI elements of the dashboard to implement certain recommendations, and may be able to interact with other GUI elements of the dashboard to contact service personnel or other responsible entities to request that they implement certain other recommendations, as appropriate. In some embodiments, recommendations may include the projected decrease in the risk percentage (or increase in safe percentage) if the recommendation is implemented.

Fig. 7 displays a flowchart for risk calculation for a site. At 702, a computing device and/or user may associate a respective device sensitivity to each of a plurality of devices disposed within multiple zones of a site and a respective zone sensitivity to each of the multiple zones, wherein the plurality of devices monitor the site. The sensitivities may include security device/item vulnerabilities, maximum weights, average weights, factor weights, and/or impact values for zones and sites. At 704, a computing device and/or user may monitor the plurality of devices to get status information. Status information may include, for example, device offline, device online, device not working properly, device power low, device battery running low, replacement battery needed, device working properly, firmware update needed, camera occluded, and/or door not properly closed, etc. The monitoring may be accomplished through direct or wireless connection to the device. At 706, a computing device and/or user may determine an aggregate risk for the site based on the zone sensitivities, the device sensitivities, and the device status information, wherein the aggregate risk is proportional to a number of devices in an error status and inversely proportional to a total number of the plurality of devices. As disclosed herein, the aggregate risk may be based on one or more variations of the risk percentage algorithm employed to calculate the risk percentage of the military base 100.

Fig. 8 displays another flowchart for risk calculation for a site. At 810, a computing device and/or user may identify a site (e.g., nuclear plant, school, house, power plant, embassy, consulate, neighborhood, facility, etc.). At 812, a computing device and/or user may divide the site into multiple zones. The computing device may suggest certain divisions which the user may accept or decline. The user may manually select how each zone is divided. At 814, a computing device and/or user may recognize a plurality of devices disposed within the multiple zones, wherein a respective representation for each of the plurality of devices is displayed in an interface. The devices may be recognized due to their connection to a central hub, computing device, Wi-Fi network, intranet, and/or internet network, etc. The user may manually select devices as being disposed within the multiple zones. At 816, a computing device and/or user may establish a relationship between each of the plurality of devices and one of the multiple zones. In certain cases, the user may place information on one or more devices that establish a relationship between the given one or more devices and one or more zones. In other cases, the user may input an association between a security device and one or more zones. In other cases, the zone associated with one or more devices may be discerned based on the geolocation of the one or more devices.

At 818, a computing device and/or user may associate a respective device sensitivity to each of the plurality of devices. These sensitivities may include the security device/item vulnerabilities and/or maximum weights, average weights, factor weights. The device sensitivities may be associated with the devices by default or on a case-by-case basis, as disclosed in Figs. 3A and 3B. At 820, a computing device and/or user may associate a respective zone sensitivity to each of the multiple zones. The zone sensitivities may include impact values and/or maximum weights, average weights, factor weights. At 822, a computing device and/or user may monitor the plurality of devices to get status information. Status information may include, for example, device offline, device online, device not working properly, device power low, device battery running low, replacement battery needed, device working properly, firmware update needed, camera occluded, and/or door not properly closed, etc. At 824, a computing device and/or user may determine an aggregate risk for the site based on the zone sensitivities, the device sensitivities, and the device status information, wherein the aggregate risk is proportional to a number of devices in an error status and inversely proportional to a total number of the plurality of devices. An error status may include a failure, compromised, damaged, and/or malfunctioning of a device (e.g., device offline, device online, device not working properly, device power low, device battery running low, replacement battery needed, device working properly, firmware update needed, camera occluded, and/or door not properly closed, etc.). The aggregate risk is proportional to a number of devices in an error status and inversely proportional to a total number of the plurality of devices due to the fact that the items in an error status are in the numerator and the total number of items is in the denominator of equation 1. The aggregate risk may be based on one or more variations of the risk percentage algorithm employed to calculate the risk percentage of the military base 100.

As understood within the present disclosure, likelihood may be expressed as a combination of the threat agent factors and one or more vulnerabilities that can be uncovered and exploited by an attacker. Threat agent factors may be related to the probability of a successful attack by a group of threat agents. One or more of the following threat agent factors may be employed:

Skill Level - How technically skilled is this group of threat agents? No technical skills, some technical skills, advanced computer user, network and programming skills, security penetration skills; Motive - How motivated is this group of threat agents to find and exploit this vulnerability? Low or no reward, possible reward, high reward; Opportunity - What resources and opportunities are required for this group of threat agents to find and exploit this vulnerability? Full access or expensive resources required, special access or resources required, some access or resources required, no access or resources required; and Size - How large is this group of threat agents? Developers, system administrators, intranet users, partners, authenticated users, anonymous Internet users.

The next set of factors are related to the vulnerability involved. The objective may be to estimate the likelihood of the particular vulnerability involved being discovered and exploited. One or more of the following vulnerability factors may be employed:

Ease of Discovery - How easy is it for this group of threat agents to discover this vulnerability? Practically impossible, difficult, easy, automated tools available; Ease of Exploit - How easy is it for this group of threat agents to actually exploit this vulnerability? Theoretical, difficult, easy, automated tools available; Awareness - How well known is this vulnerability to this group of threat agents? Unknown, hidden, obvious, public knowledge; and Intrusion Detection - How likely is an exploit to be detected? Active detection in application, logged and reviewed, logged without review, not logged.

When considering the impact of a successful attack, it may be helpful to consider two kinds of impacts. The first is the technical impact on the application, the data it uses, and the functions it provides. The other is the business impact on the business and company operating the application. Technical impact may be broken down into factors aligned with security areas of concern: confidentiality, integrity, availability, and/or accountability. The objective may be to estimate the magnitude of the impact on the system if a vulnerability were to be exploited. One or more of the following technical impact factors may be employed:

Loss of Confidentiality - How much data could be disclosed and how sensitive is it? Minimal non-sensitive data disclosed, minimal critical data disclosed, extensive non-sensitive data disclosed, extensive critical data disclosed, all data disclosed; Loss of Integrity - How much data could be corrupted and how damaged is it? Minimal slightly corrupt data, minimal seriously corrupt data, extensive slightly corrupt data, extensive seriously corrupt data, all data totally corrupt; Loss of Availability - How much service could be lost and how vital is it? Minimal secondary services interrupted, minimal primary services interrupted, extensive secondary services interrupted, extensive primary services interrupted, all services completely lost; and Loss of Accountability - Are the threat agents' actions traceable to an individual? Fully traceable, possibly traceable, completely anonymous

The business impact may stem from the technical impact but may include a deep understanding of what is important to the company running the application. One or more of the following business impact factors may be employed: Financial damage - How much financial damage will result from an exploit? Less than the cost to fix the vulnerability, minor effect on annual profit, significant effect on annual profit, bankruptcy; Reputation damage - Would an exploit result in reputation damage that would harm the business? Minimal damage, Loss of major accounts, loss of goodwill, brand damage; Non-compliance - How much exposure does non-compliance introduce? Minor violation, clear violation, high profile violation; and Privacy violation - How much personally identifiable information could be disclosed? One individual, hundreds of people, thousands of people, millions of people

With reference to FIG. 9, there is illustrated a schematic diagram of an example computing device 900. As depicted, the computing device 900 includes at least one processor 910, a memory 920, and program instructions 930 stored within the memory 920, as well as input and output interfaces (I/O interfaces) 902 and 904, respectively. For simplicity, only one computing device 900 is shown; the devices described herein and/or any other computing devices included as part of other elements of the present disclosure (e.g., risk calculation methods) may be embodied by one or more implementations of the computing device 900, which may be the same or different types of devices. The components of the computing device 900 may be connected in various ways including directly coupled, indirectly coupled via a network, and distributed over a wide geographic area and connected via a network, for instance via a cloud computing implementation.

The I/O interfaces 902, 904 may include one or more media interfaces, via which removable media or other data sources may be coupled, one or more network interfaces, or any other suitable type of interface. The I/O interfaces 902, 904 of the computing device 900 may additionally, in some embodiments, provide interconnection functionality to one or more input devices, such as a keyboard, mouse, camera, touch screen and a microphone, or with one or more output devices such as a display screen and a speaker, for instance devices via which a user may interact with the media storage server 130. In embodiments in which the I/O interfaces 902, 904 include one or more network interfaces, the network interface(s) of the computing device 900 may enable the computing device 900 to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS9 signaling network, fixed line, local area network, wide area network, and others, including any combination of these.

The processor 910 may be, for example, any type of general-purpose microprocessor or microcontroller, a digital signal processing (DSP) processor, an integrated circuit, a field programmable gate array (FPGA), a reconfigurable processor, a programmable read-only memory (PROM), or any combination thereof. The processor 910 may be configured for executing the instructions 930 stored within the memory 920. The memory 920 may include a suitable combination of any type of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically erasable programmable read-only memory (EEPROM), Ferroelectric RAM (FRAM) or the like.

In certain embodiments, the computing device 900 is operable to register and authenticate users (using a login, unique identifier, and password for example) prior to providing access to applications, a local network, network resources, other networks, and network security devices. The computing device 900 may serve one user or multiple users.

For example, and without limitation, the computing device 900 may be a server, network appliance, set-top box, embedded device, computer expansion module, personal computer, laptop, personal data assistant, cellular telephone, smartphone device, UMPC tablets, video display terminal, gaming console, electronic reading device, and wireless hypermedia device or any other computing device capable of being configured to carry out the methods and/or implementing the systems described herein.

The embodiments of the methods, systems, devices, and computer-readable media described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references have been made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The foregoing discussion provides many example embodiments. Although each embodiment represents a single combination of inventive elements, other examples may include all possible combinations of the disclosed elements. Thus, if one embodiment comprises elements A, B, and C, and a second embodiment comprises elements B and D, other remaining combinations of A, B, C, or D, may also be used.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory computer-readable storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and at least some of the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Although the embodiments have been described in detail, it should be understood that various changes, substitutions, and alterations can be made herein without departing from the scope as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the examples described above and illustrated herein are intended to be examples only, and the appended claims are intended to include within their scope such processes, machines, manufacture, compositions of matter, means, methods, or steps.

A feature illustrated in one of the figures may be the same as or similar to a feature illustrated in another of the figures. Similarly, a feature described in connection with one of the figures may be the same as or similar to a feature described in connection with another of the figures. The same or similar features may be noted by the same or similar reference characters unless expressly described otherwise. Additionally, the description of a particular figure may refer to a feature not shown in the particular figure. The feature may be illustrated in and/or further described in connection with another figure.

Elements of processes (e.g., methods) described herein may be executed in one or more ways such as by a human, by a processing device, by mechanisms operating automatically or under human control, and so forth. Additionally, although various elements of a process may be depicted in the figures in a particular order, the elements of the process may be performed in one or more different orders without departing from the substance and spirit of the disclosure herein.

The foregoing description sets forth numerous specific details such as examples of specific systems, components, methods and so forth, in order to provide a good understanding of several implementations. It will be apparent to one skilled in the art, however, that at least some implementations may be practiced without these specific details. In other instances, well-known components or methods are not described in detail or are presented in simple block diagram format in order to avoid unnecessarily obscuring the present implementations. Thus, the specific details set forth above are merely exemplary. Particular implementations may vary from these exemplary details and still be contemplated to be within the scope of the present implementations.

Related elements in the examples and/or embodiments described herein may be identical, similar, or dissimilar in different examples. For the sake of brevity and clarity, related elements may not be redundantly explained. Instead, the use of a same, similar, and/or related element names and/or reference characters may cue the reader that an element with a given name and/or associated reference character may be similar to another related element with the same, similar, and/or related element name and/or reference character in an example explained elsewhere herein. Elements specific to a given example may be described regarding that particular example. A person having ordinary skill in the art will understand that a given element need not be the same and/or similar to the specific portrayal of a related element in any given figure or example in order to share features of the related element.

It is to be understood that the foregoing description is intended to be illustrative and not restrictive. Many other implementations will be apparent to those of skill in the art upon reading and understanding the above description. The scope of the present implementations should, therefore, be determined with reference to the appended claims, along with the full scope of equivalents to which such claims are entitled.

The foregoing disclosure encompasses multiple distinct examples with independent utility. While these examples have been disclosed in a particular form, the specific examples disclosed and illustrated above are not to be considered in a limiting sense as numerous variations are possible. The subject matter disclosed herein includes novel and non-obvious combinations and sub-combinations of the various elements, features, functions and/or properties disclosed above both explicitly and inherently. Where the disclosure or subsequently filed claims recite "a" element, "a first" element, or any such equivalent term, the disclosure or claims is to be understood to incorporate one or more such elements, neither requiring nor excluding two or more of such elements.

As used herein "same" means sharing all features and "similar" means sharing a substantial number of features or sharing materially important features even if a substantial number of features are not shared. As used herein "may" should be interpreted in a permissive sense and should not be interpreted in an indefinite sense. Additionally, use of "is" regarding examples, elements, and/or features should be interpreted to be definite only regarding a specific example and should not be interpreted as definite regarding every example. Furthermore, references to "the disclosure" and/or "this disclosure" refer to the entirety of the writings of this document and the entirety of the accompanying illustrations, which extends to all the writings of each subsection of this document, including the Title, Background, Brief description of the Drawings, Detailed Description, Claims, Abstract, and any other document and/or resource incorporated herein by reference.

As used herein regarding a list, "and" forms a group inclusive of all the listed elements. For example, an example described as including A, B, C, *and* D is an example that includes A, includes B, includes C, and also includes D. As used herein regarding a list, "or" forms a list of elements, any of which may be included. For example, an example described as including A, B, C, *or* D is an example that includes any of the elements A, B, C, and D. Unless otherwise stated, an example including a list of alternatively-inclusive elements does not preclude other examples that include various combinations of some or all of the alternatively-inclusive elements. An example described using a list of alternatively-inclusive elements includes at least one element of the listed elements. However, an example described using a list of alternatively-inclusive elements does not preclude another example that includes all of the listed elements. And, an example described using a list of alternatively-inclusive elements does not preclude another example that includes a combination of some of the listed elements. As used herein regarding a list, "and/or" forms a list of elements inclusive alone or in any combination. For example, an example described as including A, B, C, and/or D is an example that may include: A alone; A and B; A, B and C; A, B, C, and D; and so forth. The bounds of an "and/or" list are defined by the complete set of combinations and permutations for the list.

Where multiples of a particular element are shown in a FIG., and where it is clear that the element is duplicated throughout the FIG., only one label may be provided for the element, despite multiple instances of the element being present in the FIG. Accordingly, other instances in the FIG. of the element having identical or similar structure and/or function may not have been redundantly labeled. A person having ordinary skill in the art will recognize based on the disclosure herein redundant and/or duplicated elements of the same FIG. Despite this, redundant labeling may be included where helpful in clarifying the structure of the depicted examples.

The Applicant(s) reserves the right to submit claims directed to combinations and sub-combinations of the disclosed examples that are believed to be novel and non-obvious. Examples embodied in other combinations and sub-combinations of features, functions, elements and/or properties may be claimed through amendment of those claims or presentation of new claims in the present application or in a related application. Such amended or new claims, whether they are directed to the same example or a different example and whether they are different, broader, narrower or equal in scope to the original claims, are to be considered within the subject matter of the examples described herein.

## Claims

**1.** A computer-implemented method for assessing risk of a site, wherein the site is divided into multiple zones and monitored by a plurality of devices disposed within the multiple zones, the plurality of devices connected with a server over an IP network, the computer-implemented method comprising:

associating, at the server, a respective device sensitivity to each of the plurality of devices and a respective zone sensitivity to each of the multiple zones;
obtaining, at the server and over the IP network, communications from the plurality of devices;
monitoring, using the communications, the plurality of devices to get status information from the communications;
determining an aggregate risk for the site based on the zone sensitivities, the device sensitivities, and the device status information, wherein the aggregate risk is proportional to a number of devices in an error status and inversely proportional to a total number of the plurality of devices; and
outputting, to a user, an indication of the aggregate risk.

**2.** The method of claim 1, wherein determining the aggregate risk comprises determining zone-specific risks, the aggregate risk being based on an average of the zone-specific risks, preferably based on a weighted average of the zone-specific risks, and more preferably based on a weighted average of the zone-specific risks in which weights are associated with each of the multiple zones.

**3.** The method of claim 2, wherein the aggregate risk is determined based on a maximum zone-specific risk, an average zone-specific risk, and a ratio of zones in risk to a total number of the multiple zones, preferably wherein the average zone-specific risk is determined excluding the maximum zone-specific risk, and more preferably wherein the average zone-specific risk is determined excluding the maximum zone-specific risk and the aggregate risk is based on a weighted maximum zone-specific risk.

**4.** The method of claim 2 or 3, wherein determining zone-specific risks comprises determining, on a per-zone basis, a maximum device-specific risk and an average device-specific risk, wherein the aggregate risk is based on the maximum device-specific risk of the multiple zones, the average device-specific risk of the multiple zones, and a ratio of the number of devices in the error status to the total number of the plurality of devices, preferably wherein the average device-specific risk for each zone is determined excluding the maximum device-specific risk within the zone, more preferably wherein the average device-specific risk for each zone is determined excluding the maximum device-specific risk within the zone and wherein the aggregate risk is determined based on a maximum zone-specific risk, an average zone-specific risk, and a ratio of zones in risk to a total number of the multiple zones.

**5.** The method of claim 4, wherein the aggregate risk is based on a weighted maximum device specific risk, a weighted average of the device-specific risk of the multiple zones, a weighted ratio of the number of devices in the error status to the total number of the plurality of devices, a weighted maximum zone-specific risk, a weighted average zone-specific risk, and a weighted ratio of zones in risk to a total number of the multiple zones.

**6.** The method of claim 4 or 5, wherein the average zone-specific risk is determined excluding the maximum zone-specific risk.

**7.** The method of any one of claims 2 to 6, comprising outputting the aggregate risk and the zone-specific risks via an interface.

8. The method of any one of claims 1 to 7, wherein the aggregate risk is determined based on a ratio of the number of devices in the error status to the total number of the plurality of devices.

9. The method of any one of claims 1 to 8, wherein associating the respective zone sensitivity to the multiple zones comprises associating, to each of the multiple zones, a vulnerability indicative of a risk of the respective zone being compromised.

10. The method of any one of claims 1 to 9, wherein associating the respective zone sensitivity to the multiple zones comprises associating, for each zone of the multiple zones, an impact indicative of a potential damage that would be caused if the respective zone is compromised.

11. The method of any one of claims 1 to 10, wherein associating the respective device sensitivity to the plurality of devices comprises associating, to each of the plurality of devices, a vulnerability indicative of a level of exposure if the respective device is compromised, preferably wherein the level of exposure is based on a scope of coverage of the respective device, on the importance of the scope of coverage, or on a degree of overlap between the scope of coverage of the particular device and the scope of coverage of other devices within the plurality of devices.

12. A security system comprising:

a plurality of devices disposed within multiple zones of a site,
a server connected to said plurality of devices over an IP network, the server having a processor and non-transitory computer-readable memory storing computer-readable instructions which, when executed by the processor, cause the server to perform the method of assessing risk of the site as defined in any one of claims 1 to 11.

13. A non-transitory computer-readable medium storing computer-readable instructions
which, when executed by a computing device, cause the computing device to perform the method of any one of claims 1 to 11.

14. A system for risk assessment, the system comprising:

processor circuitry; and
a non-transitory computer-readable memory storing program instructions executable by the processor circuitry to perform the method of any one of claims 1 to 11.

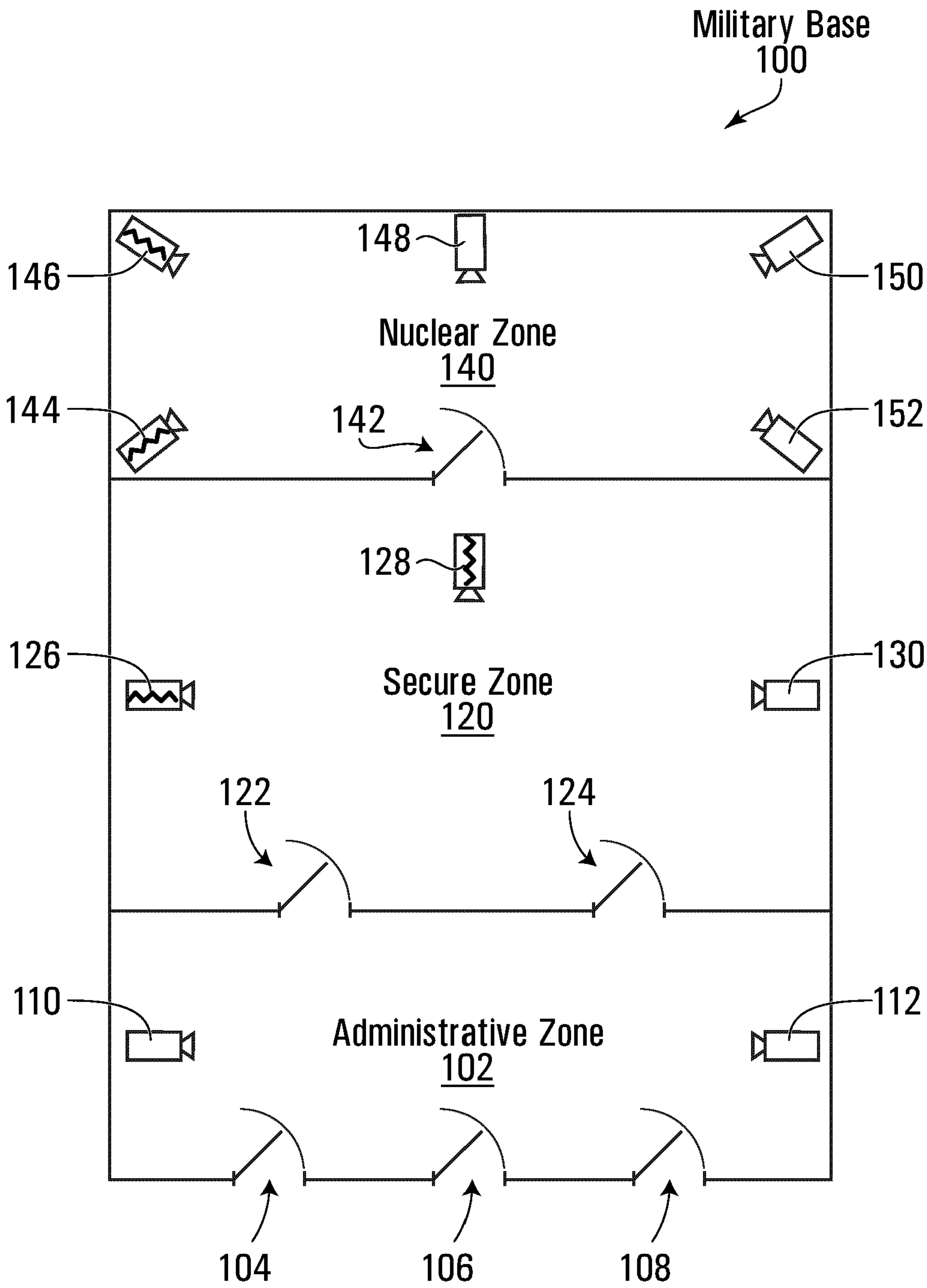

Military Base
100
146
148
150
Nuclear Zone
140
144
142
152
128
126
Secure Zone
120
130
122
124
110
Administrative Zone
102
112
104
106
108


FIG. 1

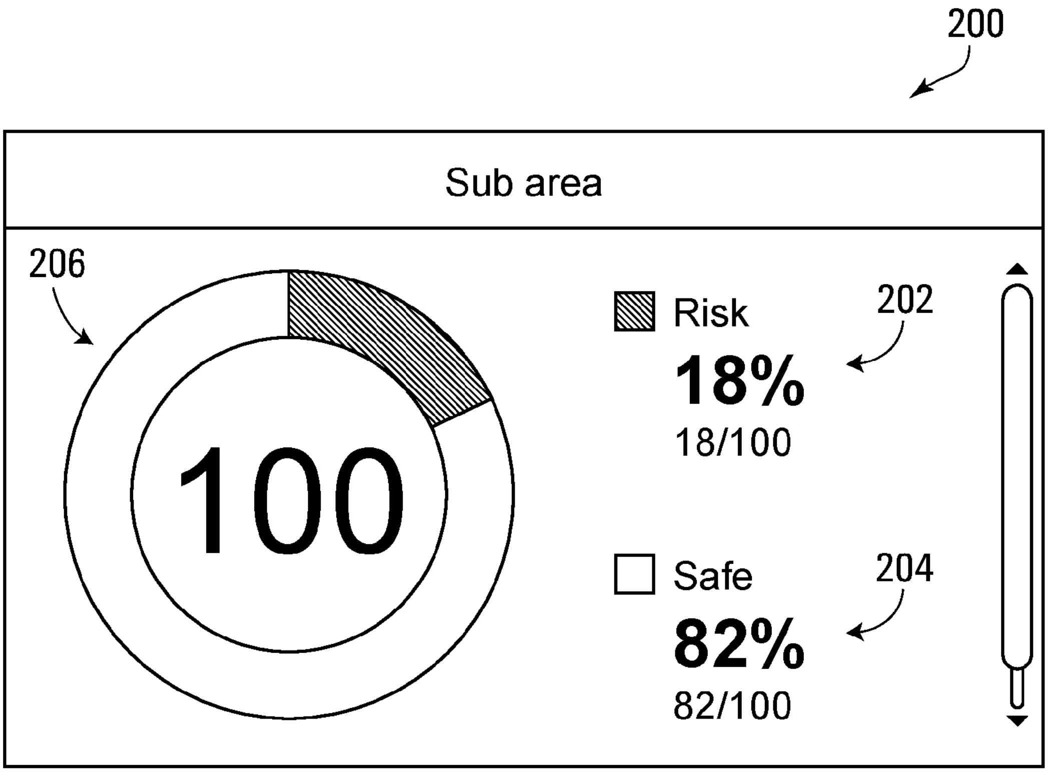
200
Sub area
206
100
Risk
202
18%
18/100
Safe
204
82%
82/100

FIG. 2A

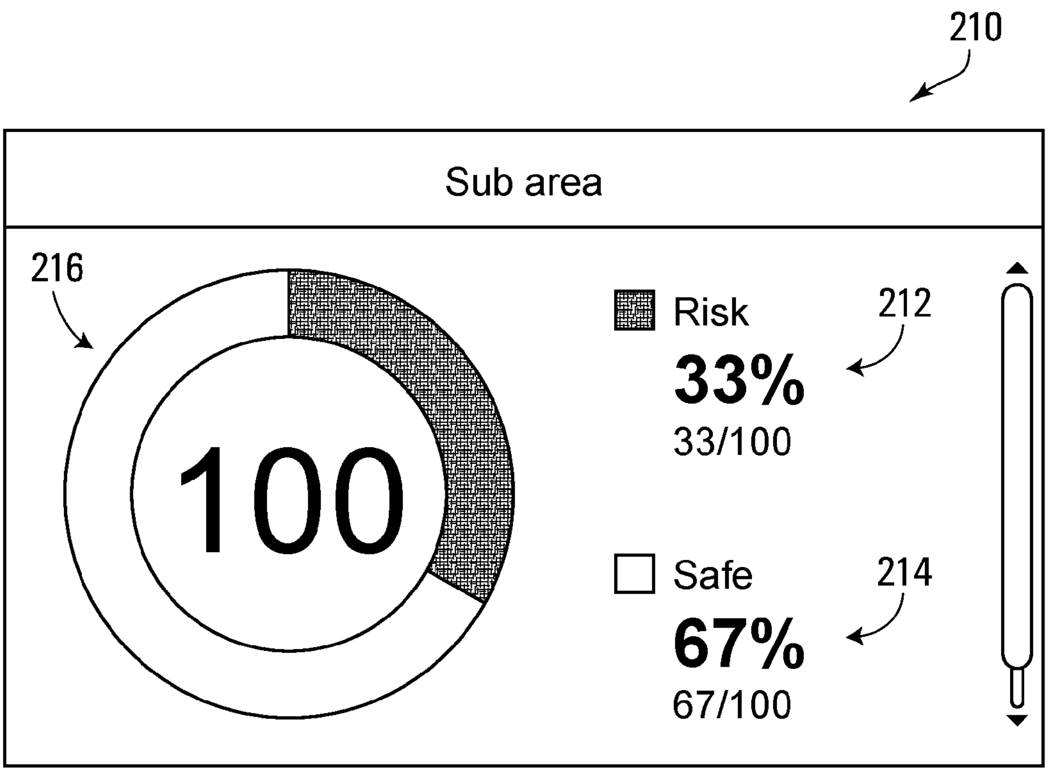
210
Sub area
216
100
Risk
212
33%
33/100
Safe
214
67%
67/100

FIG. 2B

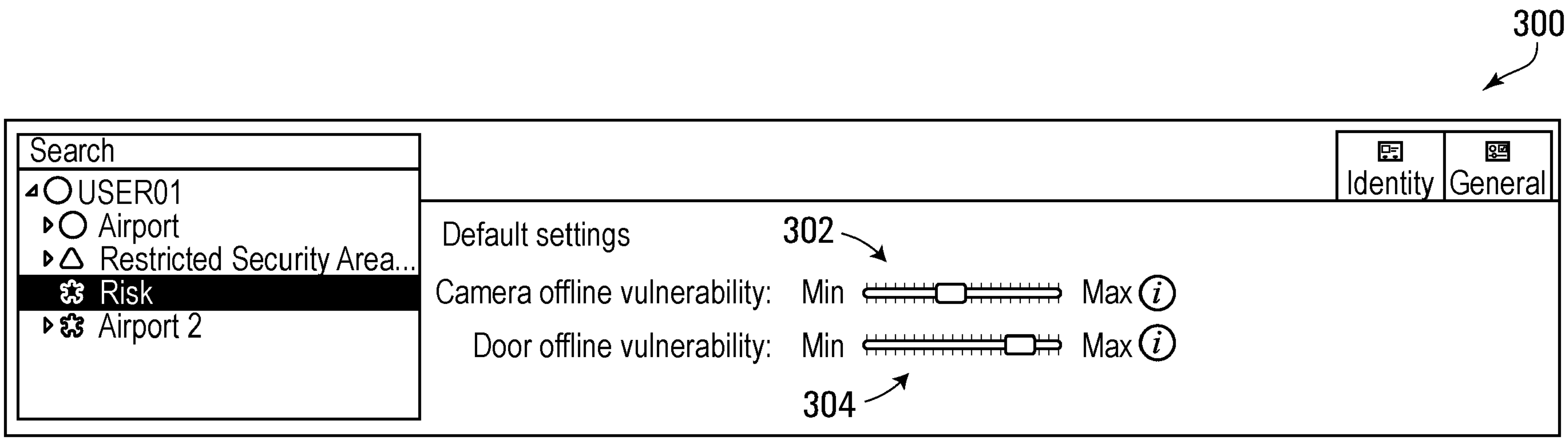
300
Search
USER01
Airport
Restricted Security Area...
Risk
Airport 2
Identity
General
Default settings
302
Camera offline vulnerability:
Min
Max
Door offline vulnerability:
Min
Max
304

FIG. 3A

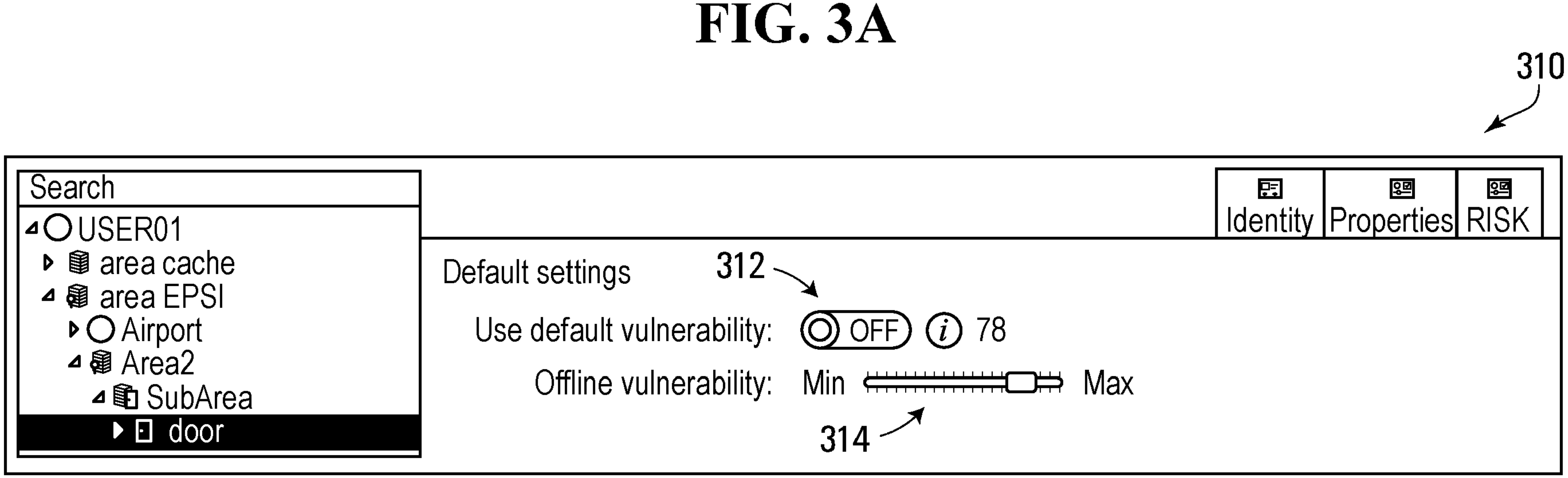
310
Search
USER01
area cache
area EPSI
Airport
Area2
SubArea
door
Identity
Properties
RISK
Default settings
312
Use default vulnerability:
OFF
78
Offline vulnerability:
Min
Max
314

FIG. 3B

400

Situation awareness

| Time | Name | Type | | Area risk value | Reason | Device state |
|---|---|---|---|---|---|---|
| 10:36:14 | pre_treasure_3 | Door | ▼ | 68 | Device state changed | Online |
| 10:36:22 | treasureArea | Area | ▼ | 0 | Sub area risk changed | |
| 10:37:30 | treasureArea | Area | ▲ | 47 | Sub area risk changed | |
| 10:47:19 | pre_treasure_0 | Door | ▲ | 63 | Device state changed | Online |
| 11:00:50 | treasureArea | Area | ▼ | 62 | Sub area risk changed | |
| 11:25:48 | treasureArea | Area | ▲ | 66 | Sub area risk changed | |

FIG. 4

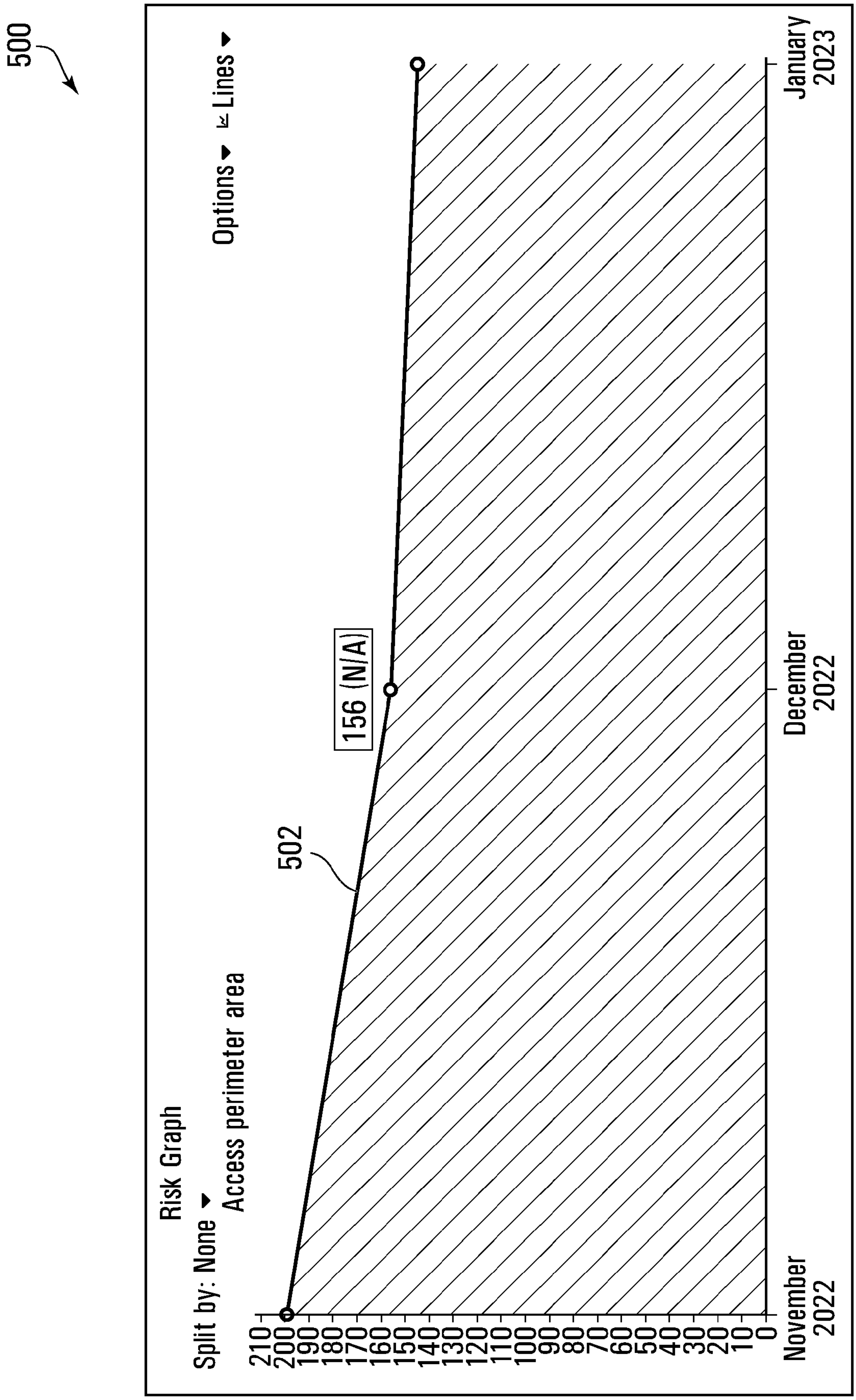
500
Risk Graph
Split by: None
Access perimeter area
Options
Lines
502
156 (N/A)
210
200
190
180
170
160
150
140
130
120
110
100
90
80
70
60
50
40
30
20
10
0
November 2022
December 2022
January 2023

FIG. 5

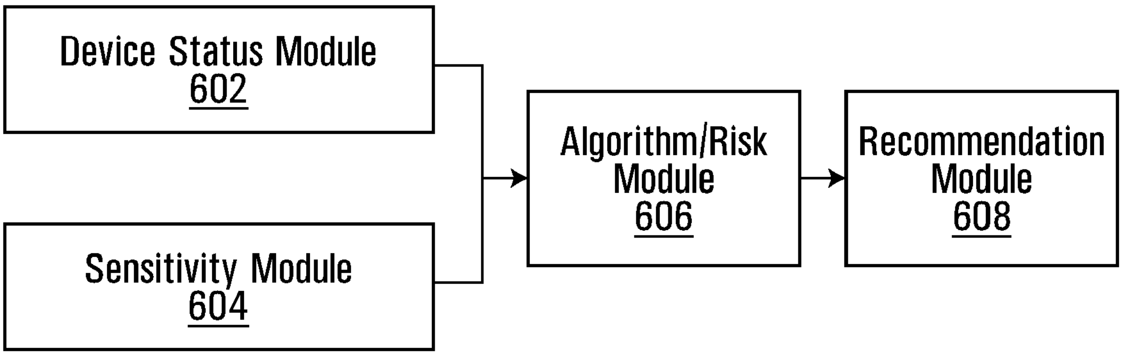
Device Status Module
602
Sensitivity Module
604
Algorithm/Risk Module
606
Recommendation Module
608

FIG. 6

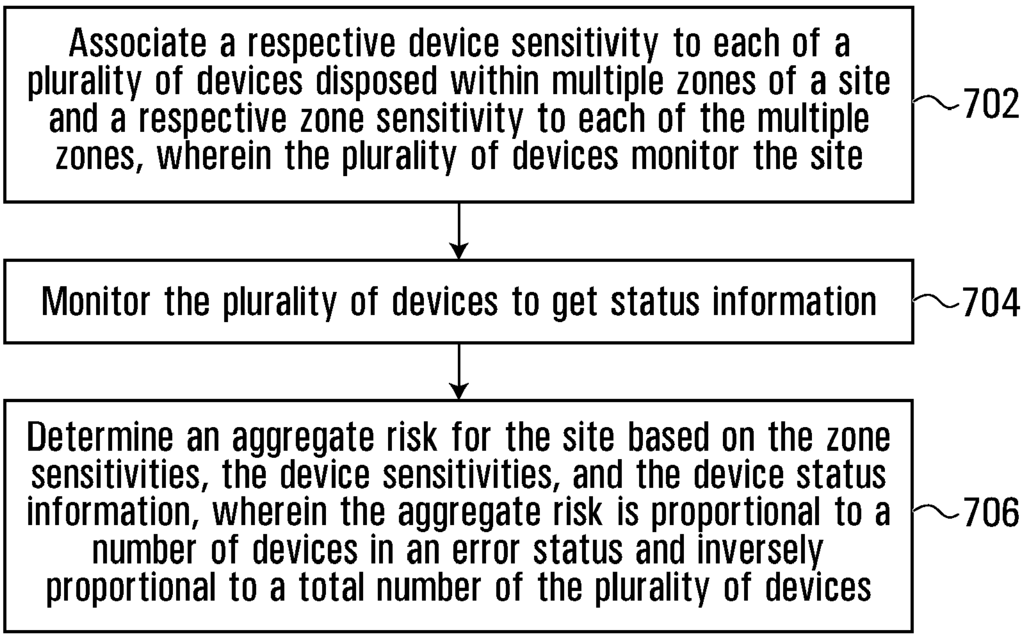
Associate a respective device sensitivity to each of a plurality of devices disposed within multiple zones of a site and a respective zone sensitivity to each of the multiple zones, wherein the plurality of devices monitor the site
702
Monitor the plurality of devices to get status information
704
Determine an aggregate risk for the site based on the zone sensitivities, the device sensitivities, and the device status information, wherein the aggregate risk is proportional to a number of devices in an error status and inversely proportional to a total number of the plurality of devices
706

FIG. 7

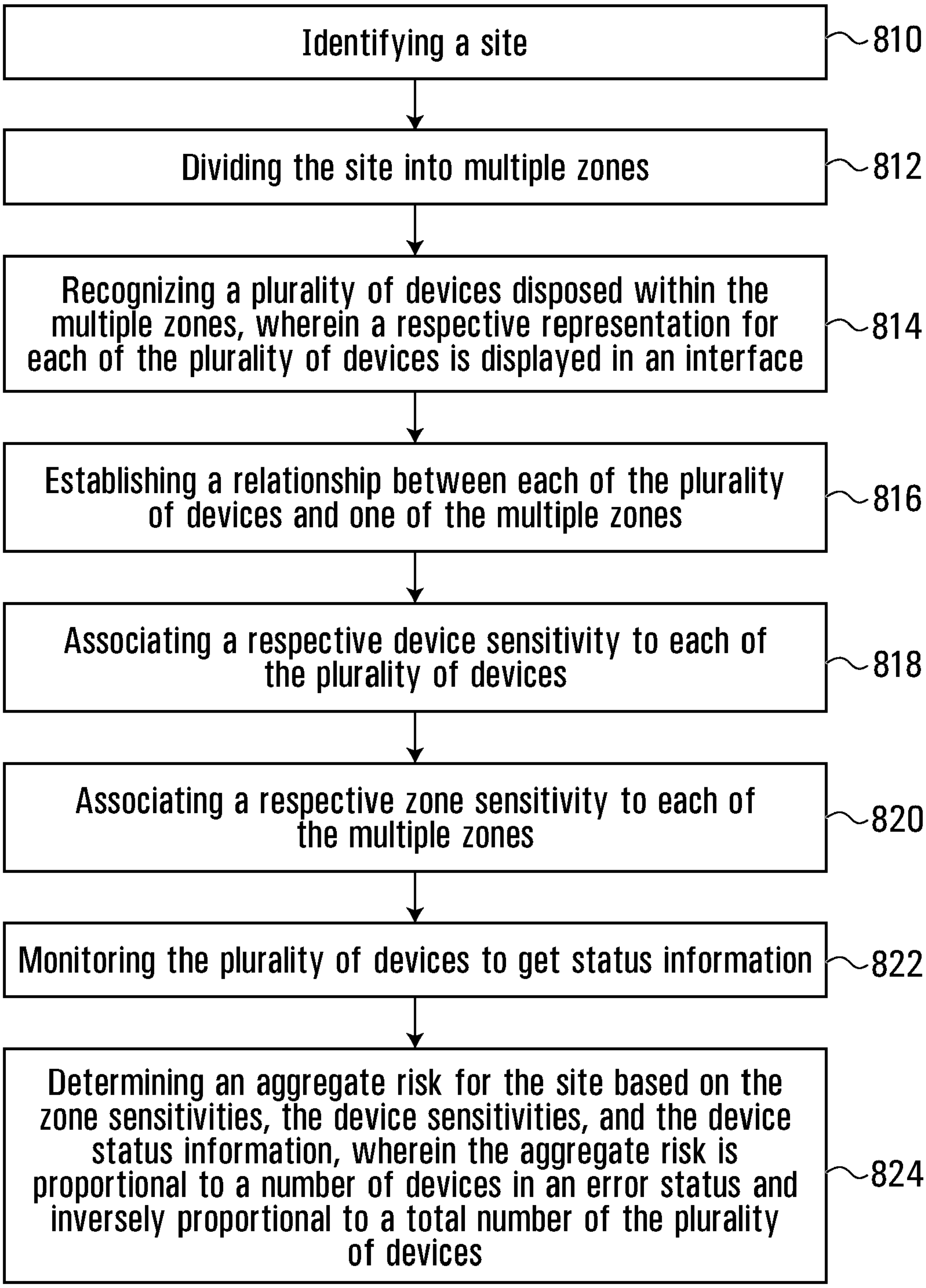
Identifying a site
810
Dividing the site into multiple zones
812
Recognizing a plurality of devices disposed within the multiple zones, wherein a respective representation for each of the plurality of devices is displayed in an interface
814
Establishing a relationship between each of the plurality of devices and one of the multiple zones
816
Associating a respective device sensitivity to each of the plurality of devices
818
Associating a respective zone sensitivity to each of the multiple zones
820
Monitoring the plurality of devices to get status information
822
Determining an aggregate risk for the site based on the zone sensitivities, the device sensitivities, and the device status information, wherein the aggregate risk is proportional to a number of devices in an error status and inversely proportional to a total number of the plurality of devices
824

FIG. 8

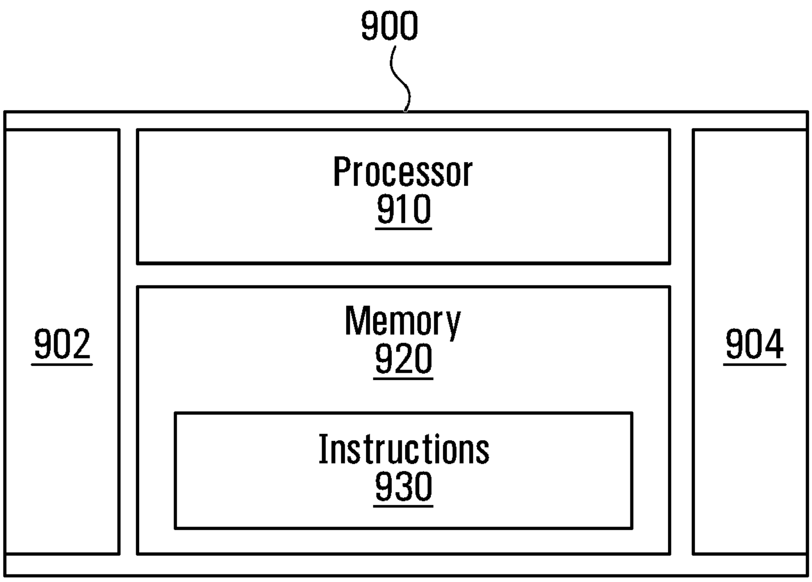


FIG. 9

Europäisches Patentamt
European Patent Office
Office européen des brevets

# EUROPEAN SEARCH REPORT

Application Number
EP 23 30 6527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/330228 A1 (KNAPP ERIC D [US] ET AL) 10 November 2016 (2016-11-10)<br>* paragraphs [0042], [0044], [0064], [0071], [0074] *<br>& US 2016/050225 A1 (CARPENTER SETH G [US] ET AL) 18 February 2016 (2016-02-18)<br>* paragraphs [0020] - [0023], [0029], [0031], [0035], [0039] - [0042], [0046] - [0049], [0058] - [0062]; figures 1,2A,2B,4A-4E *<br>----- | 1-14 | INV.<br>H04L9/40<br>G06F21/57 |
| A | US 2014/137257 A1 (MARTINEZ RALPH [US] ET AL) 15 May 2014 (2014-05-15)<br>* paragraphs [0131] - [0133] *<br>----- | 1-14 | |

TECHNICAL FIELDS SEARCHED (IPC)

G06F
H04L

The present search report has been drawn up for all claims

1

| Place of search | Date of completion of the search | Examiner |
|---|---|---|
| Munich | 23 November 2023 | Kaplan, Alihan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 30 6527

This annex lists the patent family members relating to the patent documents cited in the above-mentioned European search report. The members are as contained in the European Patent Office EDP file on
The European Patent Office is in no way liable for these particulars which are merely given for the purpose of information.

23-11-2023

| Patent document cited in search report | Publication date | Patent family member(s) | Publication date |
| --- | --- | --- | --- |
| US 2016330228 A1 | 10-11-2016 | US 2016330228 A1 | 10-11-2016 |
| | | WO 2016178824 A1 | 10-11-2016 |
| US 2014137257 A1 | 15-05-2014 | NONE | |

EPO FORM P0459

For more details about this annex : see Official Journal of the European Patent Office, No. 12/82